# FASCICULE DE BREVET EUROPEEN

(11) **EP 0 875 054 B1**
(45) Date de publication et mention de la délivrance du brevet: **22.03.2000**
(21) Numéro de dépôt: 97900640.0
(22) Date de dépôt: 14.01.1997
(51) Int. Cl.: G08G 5/00

(54) **PROCEDE ET DISPOSITIF D'AIDE A LA NAVIGATION AERIENNE, FACILITANT L'ENTREE ET LE CONTROLE DE DONNEES DE VOL**
VERFAHREN UND VORRICHTUNG ZUR HILFE VON LUFTNAVIGATION, DIE DIE EINFÜHRUNG UND KONTROLLE VON FLUGDATEN ERLEICHTERN
AIR NAVIGATION AID DEVICE AND METHOD FACILITATING THE INPUT AND CONTROL OF FLIGHT DATA

(30) Priorité: 19.01.1996 FR 9600604
(43) Date de publication de la demande: 04.11.1998
(73) Titulaire: THOMSON-CSF SEXTANT, 78141 Vélizy Villacoublay (FR)
(72) Inventeur: BOMANS, Muriel, F-94117 Arcueil Cédex (FR); GRAND-PERRET, Sylvie, F-94117 Arcueil Cédex (FR)
(74) Mandataire: Guérin, Michel
(86) Numéro de dépôt international: FR9700059
(87) Numéro de publication internationale: WO9726637

(56) Documents cités:
- EP-A- 0 580 474
- FIRST ANNUAL PHOENIX CONFERENCE ON COMPUTERS AND COMMUNICATIONS, PHOENIX, AZ, USA, 9-12 MAY 1982, 1982, NEW YORK, NY, USA, IEEE, USA, pages 307-312, XP000604896 BOWE L J: "Flight-management system control display technology in new-generation transport aircraft"
- PROCEEDINGS OF THE NATIONAL AEROSPACE AND ELECTRONICS CONFERENCE (NAECON), DAYTON, MAY 22 - 26, 1989, vol. 4 OF 4, 22 Mai 1989, INSTITUTE OF ELECTRICAL AND ELECTRONICS ENGINEERS, pages 1775-1781, XP000076529 TAYLOR L O ET AL: "A RECONFIGURABLE INTEGRATED NAVIGATION AND FLIGHT MANAGEMENT SYSTEM FOR MILITARY TRANSPORT AIRCRAFT"

## Description

L'invention concerne les procédés et les dispositifs d'assistance à la navigation aérienne.

D'une façon générale, on sait que dans les aérodynes (avions, hélicoptères, etc.) de conception moderne, le pilote doit dialoguer avec un système de gestion de vol (en anglais "Flight Management System") qui est un calculateur embarqué dans l'aérodyne (dans la suite on parlera d'avion) pour assister le pilote dans un certain nombre d'opérations. Ces opérations sont principalement des opérations de définition de plan de vol avant le décollage, des opérations de pilotage (manuel ou automatique) pendant le décollage et l'atterrissage, des opérations de navigation aérienne (calculs de trajectoires, etc.), des opérations de contrôle systématique, en croisière ou au moment de l'approche d'un aéroport.

Le système de gestion de vol fonctionne à partir de données introduites par le pilote, de données fournies par des capteurs répartis dans l'avion, et éventuellement de données numériques transmises par voie hertzienne depuis le sol ou depuis d'autres avions ou même des satellites (système "DATALINK" en voie de généralisation).
Le dialogue entre l'équipe de pilotage et le système de gestion de vol se fait principalement par le moyen d'au moins trois interfaces qui sont :
- un écran de navigation ("Navigation Display") sur lequel est représenté le tracé de la route désirée pour l'avion, c'est-à-dire une représentation graphique du plan de vol de l'avion et la situation de l'avion sur ce plan;
- un écran primaire de pilotage ("Primary Flight Display") qui affiche un horizon artificiel qui s'incline lorsque l'avion s'incline, une indication d'assiette longitudinale de l'avion, et d'autres indications utiles au pilotage, en particulier le mode de guidage de l'avion;
- une boîte de commande de vol ("Flight Control Unit") ayant des commandes manuelles pour sélectionner des consignes telles que le cap désiré pour l'avion;
- et enfin une console clavier-écran, appelée MCDU ("Multipurpose Control Display Unit") qui est une console d'affichage et d'entrées de données permettant à l'équipe de pilotage d'introduire des données dans le système de gestion de vol et de lire des informations communiquées par le système de gestion de vol en fonction des données introduites.

La console d'affichage et d'entrées de données possède d'une part un écran, d'autre part des touches de fonction et enfin un clavier alphanumérique.

Comme on le sait, les opérations à effectuer par l'équipe de pilotage (un pilote ou deux pilotes) pendant les différentes phases du vol sont nombreuses; elles doivent être exécutées d'une manière systématique, de manière que le système de gestion de vol dispose de toutes les données de planification de vol et de contrôle qui sont nécessaires.

En particulier, une série d'opérations de contrôle et d'entrées de données doivent être effectuées par l'équipe de pilotage pendant la phase de préparation de vol ("Preflight"), et avant la phase d'approche ("Approach"). D'autres opérations encore doivent être effectuées en vol ("En-route").

Le pilote qui effectue les opérations doit prendre garde que toutes les opérations prévues dans la procédure soient bien exécutées. Et dans le cas d'un pilotage à deux, ces opérations doivent être partagées avec le pilote adjoint et les opérations effectuées par l'un des pilotes doivent être vérifiées par l'autre. La communication entre les deux pilotes est orale, le cokpit de pilotage comportant deux postes de pilotage identiques côte à côte avec dans chaque poste des interfaces identiques avec le système de gestion de vol qui est unique (ou double avec un système de synchronisation).

Le document EP-A-580474 montre un dispositif et un procédé d'aide à la navigation aérienne, utilisant un système de gestion de vol couplé à une console d'affichage et d'entrées de données, permettant de sélectionner des zones prédéterminées de l'écran pour exécuter des opérations correspondant aux différentes zones.

Un but de l'invention est de proposer un procédé et un dispositif d'aide à la navigation aérienne qui facilitent pour le pilote l'exécution des tâches qui lui incombent en relation avec le système de gestion de vol pendant les différentes phases d'un vol.

Le procédé utilise le système de gestion de vol et sa console d'affichage et d'entrées de données; la console est d'un type qui permet notamment de sélectionner des zones prédéterminées de l'écran pour déclencher l'exécution d'opérations correspondant à la zone sélectionnée. Le procédé consiste à :
- afficher simultanément sur l'écran de la console une série de zones principales se succédant de haut en bas de l'écran, chaque zone correspondant à une étape d'une procédure de navigation, et une zone auxiliaire indépendante associée à chaque zone principale et située immédiatement à côté de cette zone principale,
- en cas de sélection par un utilisateur d'une zone principale correspondant à une étape de procédure déterminée, afficher sur la console des éléments d'information nécessaires à l'exécution de cette étape,
- en cas d'entrée dans la console d'une information de validation de l'étape de procédure correspondant à la zone principale sélectionnée, afficher à nouveau la série de zones principales et les zones auxiliaires associées, et afficher simultanément dans la zone auxiliaire associée à la zone principale sélectionnée une marque spécifique indiquant que l'étape de procédure a été validée,
- conserver en mémoire et réafficher après l'exécution d'autres étapes de procédure correspondant à d'autres zones principales, les marques spécifiques précédemment affichées, de manière à faire apparaître globalement sur l'écran de la console l'exécution validée de toutes les étapes de procédure déjà effectuées.

Et dans le cas où deux postes de pilotage sont prévus, avec deux consoles d'affichage et d'entrée de données communiquant avec un même système de gestion de vol, on prévoit de préférence qu'une première et une seconde zones auxiliaires sont associées à chacune des zones principales, et on prévoit également que :
- l'entrée d'une information de validation par la première console lors de l'exécution d'une étape de procédure correspondant à une zone principale déterminée entraîne l'affichage d'une marque spécifique dans la première zone auxiliaire associée à cette zone principale, aussi bien sur la première console que sur la deuxième,
- et réciproquement, l'entrée d'une information de validation par la deuxième console entraîne l'affichage d'une marque spécifique dans la deuxième zone auxiliaire, aussi bien sur la deuxième console que sur la première.

L'affichage des marques spécifiques est réaffiché à chaque fois sur les deux consoles après l'exécution de chaque étape de procédure, de manière à faire apparaître globalement sur les deux consoles l'exécution validée de toutes les étapes de procédure déjà effectuées, l'auteur de la validation étant indiqué par celle des deux zones auxiliaires qui est cochée par une marque spécifique.

L'invention concerne non seulement le procédé qui vient d'être donné en résumé, mais aussi un dispositif d'aide à la navigation aérienne.

Le dispositif selon l'invention utilise un système de gestion de vol qui dialogue avec le pilote par le moyen de plusieurs interfaces parmi lesquels au moins une console d'affichage et d'entrée de données, et il est caractérisé en ce qu'il comporte des moyens pour afficher simultanément sur la console une série de zones principales successives correspondant chacune à une étape d'une procédure de navigation, et une zone auxiliaire indépendante associée à chaque zone principale et située immédiatement à côté de cette zone principale, des moyens actionnables par l'utilisateur pour sélectionner une zone principale déterminée, des moyens pour présenter sur la console, lorsqu'une zone principale est sélectionnée, un affichage nécessaire pour exécuter l'étape de procédure correspondant à cette zone principale, des moyens pour entrer dans la console une information de validation de l'étape de procédure et pour afficher alors à nouveau la série de zones principales et les zones auxiliaires associées, des moyens pour afficher dans la zone auxiliaire associée à la zone principale sélectionnée une marque spécifique indiquant que l'étape de procédure a été validée, et des moyens pour conserver en mémoire et réaffirmer après l'exécution d'autres étapes de procédure correspondant à d'autres zones principales, les marques spécifiques précédemment affichées, de manière à faire apparaître globalement sur la console l'exécution validée de toutes les étapes de procédure déjà effectuées.

Et si le système de gestion de vol comporte une deuxième console identique à la première, on prévoit qu'une première et une seconde zone auxiliaire sont associées à chacune des zones principales, des moyens étant prévus pour qu'une information de validation entrée par la première console lors de l'exécution d'une étape de procédure correspondant à une zone principale déterminée entraîne l'affichage d'une marque spécifique dans la première zone auxiliaire associée à cette zone principale, aussi bien sur la première console que sur la deuxième console, et réciproquement qu'une information de validation entrée par la deuxième console entraîne l'affichage d'une marque spécifique dans la deuxième zone auxiliaire, aussi bien sur la première console que sur la deuxième console

Parmi les avantages de l'invention on peut citer notamment le fait que le système est résistant aux interruptions : les pilotes sont fréquemment interrompus dans leurs séquences d'action, tout particulièrement dans la phase de préparation du vol. Avec l'invention, ils disposent d'un résumé des étapes déjà effectuées, et peuvent revenir rapidement à leur séquence d'actions; ils n'ont pas à reparcourir des successions de pages de tâches pour se remémorer les étapes déjà effectuées.

De plus, le procédé supportera le nouveau mode de dialogue "DATALINK" selon lequel des informations sont transmises entre le sol et le bord par voie hertzienne : des informations envoyées par le sol au système de gestion de vol pourront apparaître dans les étapes de la procédure, sous une forme particulière attirant l'attention du pilote. Le pilote vérifiera et acceptera ces informations de la même manière que s'il les avait introduites lui-même.

D'autres caractéristiques et avantages de l'invention apparaîtront à la lecture de la description détaillée qui suit et qui est faite en référence aux dessins annexés dans lesquels :

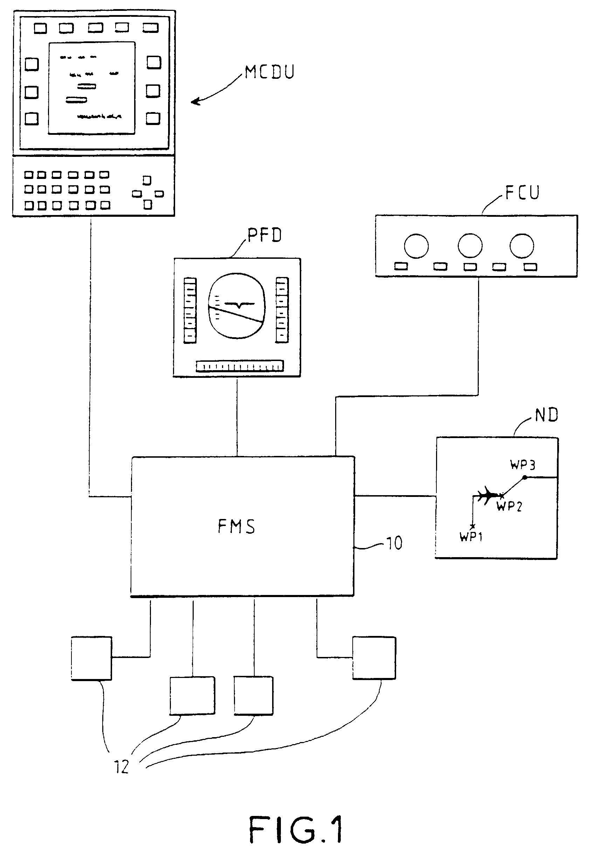

- la figure 1 représente l'ensemble du dispositif d'aide à la navigation selon l'invention;
- la figure 2 représente l'écran de la console au début d'une procédure de navigation;
- les figures 3 à 6 représentent l'écran à différentes étapes de la procédure;
- la figure 7 représente un organigramme de fonctionnement du système de gestion de vol pour les fonctions relatives à l'invention.

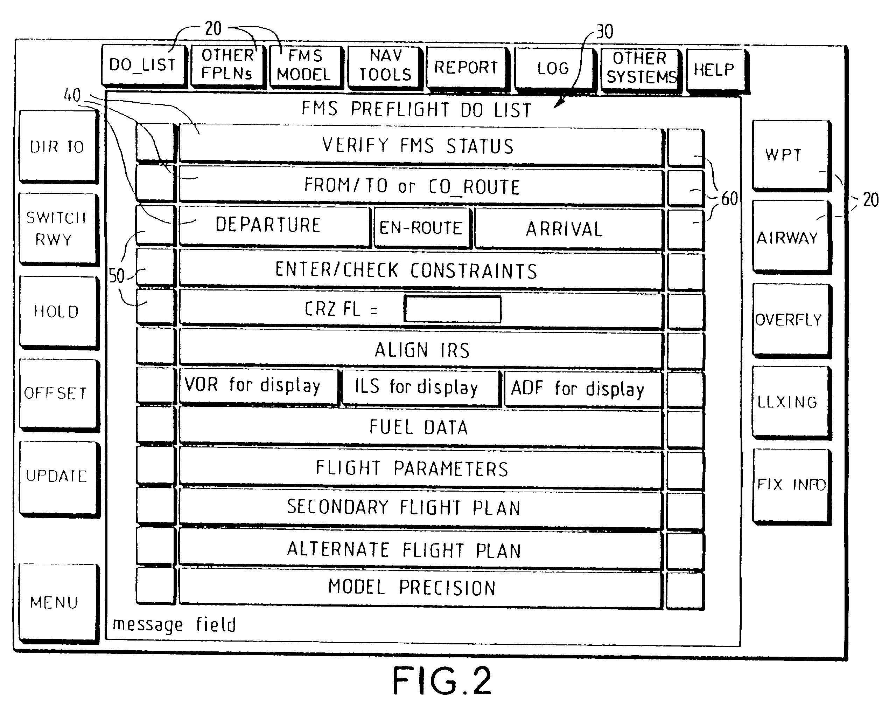

Les figures 2 à 6 comportent des indications écrites telles qu'elles peuvent apparaître dans la réalité sur un avion de ligne, et c'est pourquoi elles apparaissent sous forme de mots anglais ou d'abréviations tirées de l'anglais. Etant donné qu'elles n'ont pas de signification particulière relativement à la technique proposée par l'invention, il n'est pas utile de les donner sous une forme française qui serait moins compréhensible pour l'homme du métier. Toutefois, une traduction des mots anglais est donnée en fin de description.

Le dispositif d'aide à la navigation selon l'invention constitue une partie d'un système global de contrôle de l'avion. Ce système global comporte essentiellement :
- le système de gestion de vol, ou FMS ("Flight Management System"), qui est un calculateur 10 apte à recevoir des informations diverse, à élaborer d'autres informations, et à les communiquer au pilote par le moyen d'interfaces de dialogue;
- des capteurs 12 répartis dans l'avion, parmi lesquels par exemple des instruments de navigation (centrales inertielles IRS, etc.), des capteurs divers donnant des informations sur l'état de l'avion, éventuellement des instruments de communication avec l'extérieur, tous ces capteurs étant reliés au système de gestion de vol;
- les interfaces de dialogue avec le pilote, reliés au calculateur 10, parmi lesquels on peut trouver principalement :
   -- une boîte de commande de vol, dite FCU ("Flight Control Unit") permettant, à l'aide de boutons, de sélectionner par exemple le cap de l'avion, ou d'autres valeurs de consigne qu'il est nécessaire de fournir au système de gestion;
   -- un écran d'affichage d'informations de navigation. ND ("Navigation Display"), pour afficher des cartes, plans de vol, etc.,
   -- un écran d'affichage d'informations de pilotage, PFD ("Primary Flight Display"), pour afficher un horizon artificiel, des altitudes de l'avion, assiettes, vecteurs vitesse, une indication de mode de guidage ("Flight Mode Annunciator"), etc.,
   -- une console d'affichage et d'entrées de données, MCDU ("Multipurpose Control Display Unit"); cette console est l'instrument de dialogue principal pour ce qui concerne la présente invention, et elle fonctionne sous le contrôle direct de logiciels contenus dans le calculateur FMS. Bien entendu, la console elle-même peut comporter des logiciels propres nécessaires à son fonctionnement, dans le cas général où cette console comprend un microprocesseur et des circuits commandés par ce microprocesseur. Par exemple, les routines d'affichage de tracés sur l'écran, les routines de gestion du clavier de saisie de données, etc. sont propres à la console et les logiciels correspondants peuvent être intégrés dans la console, alors que les informations à afficher sont en général issues de logiciels contenus dans le calculateur FMS.

Dans ce système global, les éléments nécessaires à la mise en oeuvre de la présente invention sont le calculateur FMS (puisque le dialogue à prévoir est un dialogue entre le pilote et le calculateur), et la console MCDU.

La console MDCU d'affichage et d'entrées de données comporte un clavier, un écran, des touches de fonction, et des moyens pour sélectionner des zones affichées sur l'écran et activer la zone sélectionnée pour déclencher des opérations qui sont en rapport avec ce qui est affiché. Ces moyens de sélection et d'activation sont l'analogue de la "souris" bien connue utilisée dans le domaine des microordinateurs, c'est-à-dire que ce sont des moyens qui permettent
- de déplacer un curseur (visible ou invisible) dans un menu affiché sur l'écran pour sélectionner une zone proposée par ce menu, zone qui passe par exemple en surbrillance lors du passage du curseur sur cette zone;
- et d'activer une zone sélectionnée (bouton de "cliquage" de la souris).

En aéronautique on n'utilise normalement pas de souris mais plutôt des touches de déplacement, ou bien on prévoit que l'écran est un écran tactile, la désignation d'une zone par le doigt établissant la sélection de cette zone; ou encore on peut utiliser une tablette tactile à côté de l'écran. Tous ces moyens de sélection de zones sur l'écran sont équivalents.

Les touches de fonction de la console peuvent être disposées tout autour de l'écran, mais on notera qu'elles pourraient même être affichées sur l'écran lui-même, par exemple sur la périphérie d'une région centrale de l'écran; dans ce cas, les touches de fonction sont activées exactement selon le principe indiqué ci-dessus par les moyens de sélection de zone : les touches affichées sur l'écran sont des zones sélectionnables particulières sur lesquelles on peut "cliquer". C'est ce cas particulier qui est représenté sur les figures, dans lesquelles on voit des touches de fonction périphériques autour d'une région centrale qu'on peut appeler "région d'affichage de messages". Le fait que les touches de fonction soient affichées sur l'écran permet de les reconfigurer plus facilement pour modifier les fonctions associées à ces touches selon les besoins.

On va maintenant décrire les fonctions d'aide à la navigation apportées par la présente invention. Ces fonctions sont réalisées en utilisant le calculateur FMS programmé de manière spécifique pour exécuter les différentes opérations d'affichage nécessaires.

Pour aider à la compréhension de l'invention, on va décrire un scénario réaliste de navigation au cours duquel le pilote (ou les deux pilotes qui sont respectivement le pilote en fonction PF et le pilote non en fonction PNF) utilise les moyens d'aide à la navigation proposés par l'invention.

L'exemple concret est un vol sans incident, depuis l'aéroport Paris-Charles de Gaulle (CDG) à l'aéroport de Francfort (FAR).
Le scénario comporte dans cet exemple 7 grandes phases :
- préparation du vol ("Preflight")
- roulage vers les pistes de décollage
- décollage
- montée
- croisière
- descente
- approche

A tout instant, le système de gestion de vol sait dans quelle phase on est, du fait que les opérations effectuées par le pilote sont constamment prises en compte par ce système et du fait que le comportement de l'avion est en permanence détecté par les capteurs connectés au système.

### 1. Préparation du vol

C'est la phase pendant laquelle le pilote définit son plan de vol et initialise tous les paramètres de l'avion (masse en particulier).
Parmi les touches de fonction de la console MCDU, on trouve une touche spécifique utilisée dans la présente invention, qui est la touche DO_LIST. Comme on l'a dit, cette touche peut être indifféremment une touche matérielle ou une touche logicielle affichée sur l'écran et pouvant être sélectionnée par les moyens de sélection de zone.

Lorsqu'on active la touche DO_LIST, le calculateur FMS affiche dans la région d'affichage de messages une image telle que celle qu'on voit sur la figure 2; sur cette image, les touches de fonction 20 telles que la touche DO_LIST restent d'ailleurs affichées, autour de la région centrale d'affichages de messages.

L'image affichée dans la région centrale de l'écran comporte principalement :
- un en-tête d'information 30,
- des zones principales 40 sélectionnables et activables,
- des zones auxiliaires 50 et 60; les zones auxiliaires sont de préférence sélectionnables et activables, mais ce n'est pas obligatoire.
Les zones principales contiennent chacune des informations relatives à des étapes de procédure à exécuter par le pilote dans la phase de préparation; lorsqu'elles sont sélectionnées par l'utilisateur elles peuvent passer en surbrillance (ou changer de couleur, etc.) pour que cette sélection soit visible.

D'une manière générale, lorsqu'une zone principale déterminée est activée après avoir été sélectionnée, elle déclenche l'affichage par le calculateur de messages et de demandes de données nécessaires à l'exécution de l'étape de procédure correspondant à cette zone.
Les zones principales se succèdent les unes au dessous des autres et/ou les unes à côté des autres dans un ordre qui correspond à l'ordre de la procédure à exécuter par le pilote.

Lorsque l'avion est au sol et dans la phase de préparation de vol, le calculateur FMS sait qu'on est dans cette phase, et c'est pourquoi l'enclenchement de la touche DO_LIST a affiché les messages visibles sur la figure 2. Si le calculateur avait détecté que l'avion était dans une autre phase, l'enclenchement de la touche DO_LIST aurait amené une autre série de zones principales, avec d'autres indications de procédure, l'activation de ces zones différentes déclenchant alors d'autres opérations que celles qui correspondent à la figure 2.

La liste d'étapes de procédure affichée à la figure 2 et correspondant à la phase de préparation de vol comporte :
- un en-tête qui rappelle que le menu affiché est une liste d'étapes de la procédure de préparation de vol à effectuer par le pilote
- une indication écrite sur la teneur de chaque étape, dans les différentes zones principales qui se succèdent de haut en bas et de droite à gauche.

Les spécialistes de ce métier reconnaîtront aisément la signification des indications portées sur l'écran, ces indications étant toujours en anglais dans l'aéronautique. Les indications données sont des indications réalistes, mais ce ne sont que des exemples étant entendu que d'autres indications pourraient être données pour les mêmes opérations et que d'autres opérations de procédure pourraient être décidées pour une phase de vol déterminée.

Sur la figure 2, sont listées les étapes de procédure suivantes :
- vérification d'état du système de gestion de vol
- indication du trajet
- données de départ (piste d'aéroport, etc.), de vol, d'arrivée.
- altitude de croisière
- recalage des centrales inertielles sur la longitude et la latitude de l'aéroport,
- affichage forcé de moyens de radionavigation choisis par les pilotes,
- données de combustible : masse et centrage
- paramètres de vol
- plan de vol secondaire
- plan de vol de dégagement
- affichage d'un modèle de précision.

Certaines étapes peuvent être obligatoires dans la procédure, et d'autres facultatives, par exemple ici les trois dernières sont facultatives. Les étapes facultatives peuvent être affichées sous une forme légèrement différente des autres (fond grisé pour les unes, noir pour les autres par exemple).

Si l'utilisateur sélectionne et active une zone principale déterminée, le calculateur affiche un nouvel écran, principalement constitué d'informations et de demandes d'informations.

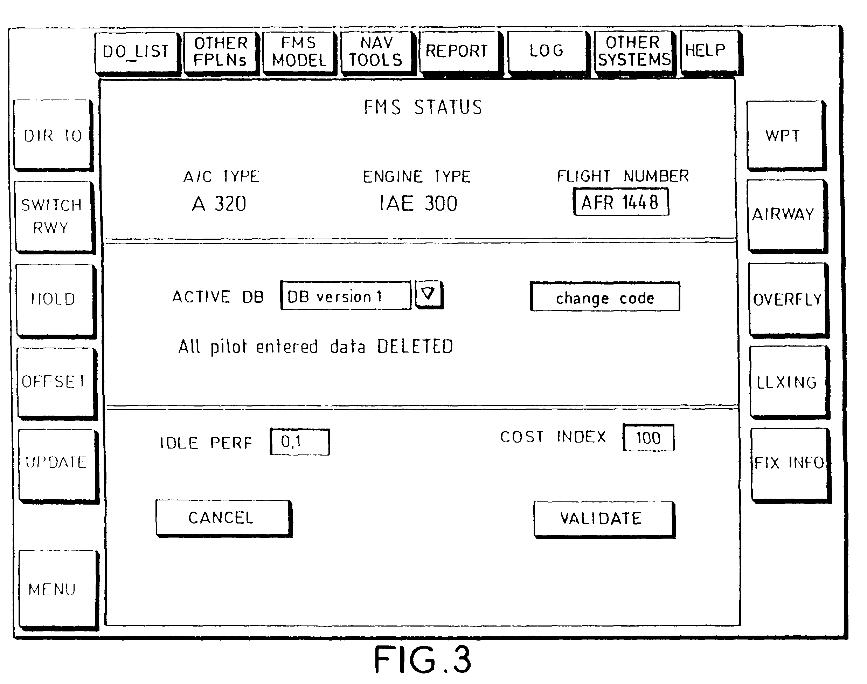

Ainsi, lorsque le pilote sélectionne et active la première zone principale, dans laquelle est affichée l'indication d'étape de procédure "Verify FMS status", il apparaît sur l'écran l'affichage représenté à la figure 3, comportant
- un en-tête ("FMS Status") rappelant qu'il s'agit de l'étape de vérification,
- des messages (principalement des informations et des demandes d'information),
- des zones réservées à la saisie des informations demandées,
- un bouton de validation "Validate", et de préférence aussi un bouton d'annulation "Cancel" pour le cas où le pilote voudrait revenir au menu sans exécuter l'étape de procédure en cours ou effacer les dernières données entrées.

Dans cet exemple, le calculateur FMS affiche sur l'écran le type d'avion et de moteur et demande des informations telles que le numéro du vol prévu, ce numéro, ici "AFR1448", est saisi au clavier par le pilote après qu'il ait sélectionné la zone correspondant à cette saisie (ou que le calculateur se soit positionné automatiquement sur cette zone). Le pilote saisit de même les autres données demandées par cette page d'écran.

Lorsque les messages correspondant à cette étape de procédure ont ainsi été reçus par l'utilisateur et lorsque les données demandées ont été introduites au clavier, l'utilisateur valide l'opération (sélection et activation de la zone "validate"), ce qui signifie que de son point de vue l'étape de procédure a été exécutée.

La validation peut être effectuée par enfoncement d'un bouton de validation, ou sélection et cliquage sur une zone "OK", ou toute autre solution classique de validation : par exemple la saisie complète des données demandées par le calculateur dans la page d'écran considérée peut être interprétée par lui comme une action de validation pour cette page. Les opérations à effectuer par l'utilisateur pour une étape de procédure déterminée peuvent impliquer le défilement successif de plusieurs pages d'écran, la validation définitive de l'exécution de l'étape de procédure étant alors effectuée sur la dernière page affichée sur la console par le calculateur FMS.

Lorsque la validation a été effectuée pour une zone principale déterminée, le calculateur affiche à nouveau la page d'écran visible à la figure 2, mais avec en outre une marque spécifique dans une zone auxiliaire associée à la zone principale considérée; cette zone auxiliaire est de préférence immédiatement adjacente à la zone principale.

Ainsi, pour l'exécution de l'étape "Verify FMS Status", l'enclenchement de la zone de validation déclenche deux opérations :
- réaffichage de l'écran de menu de la figure 2,
- et inscription d'une marque de cochage dans la zone auxiliaire 50 située immédiatement à gauche de la zone principale "Verify FMS Status".

Cette marque indique que l'étape de procédure correspondante a été effectuée et validée par le pilote qui a effectué l'étape.

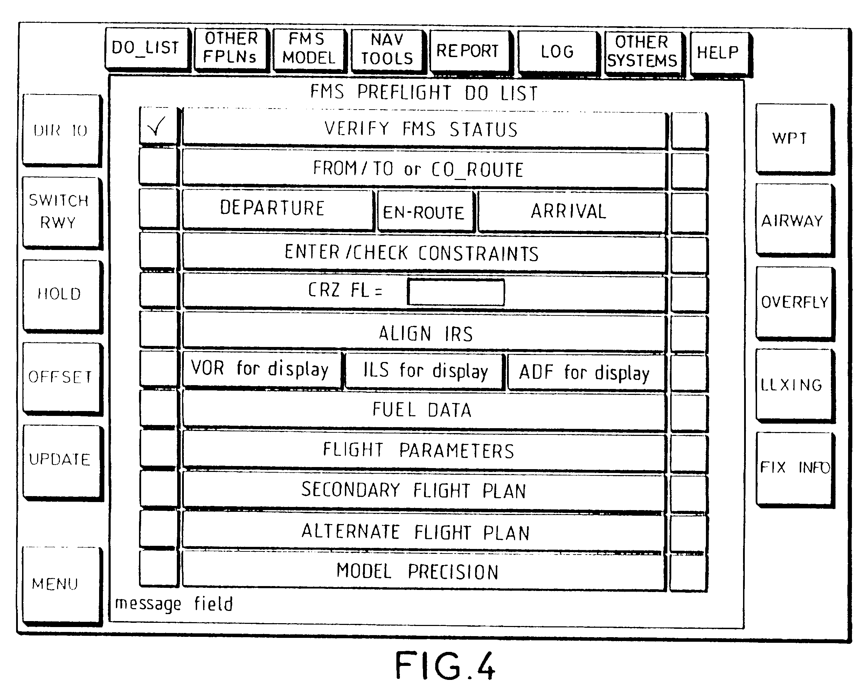

La figure 4 représente l'écran à ce stade.

Le pilote va ainsi effectuer les étapes de procédure successives proposées par l'écran "FMS Preflight DO_LIST", et une marque de cochage apparaîtra en regard de chaque étape validée. Les marques se cumulent, c'est-à-dire qu'à chaque étape de procédure validée, une nouvelle marque apparaîtra mais les marques des étapes précédemment validées réapparaîtront à chaque fois.

La liste visible sur cet écran comporte donc à la fois les étapes de procédure déjà effectuées (cochées) et les étapes de procédure qui restent à effectuer (non cochées), ce qui permet au pilote d'avoir d'une manière très parlante une conscience exacte de la situation à un moment donné par rapport à ses obligations.

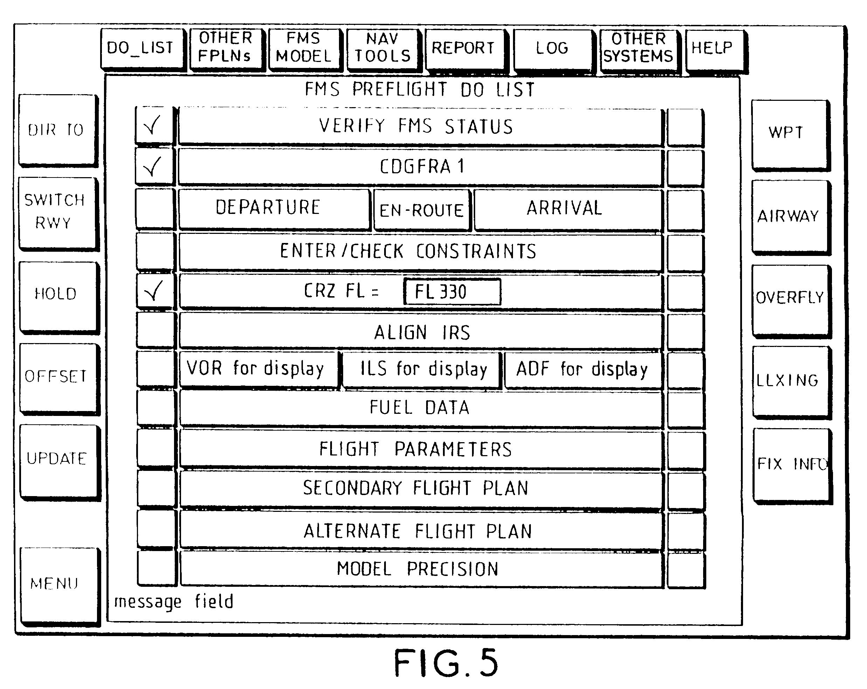

On remarquera que les indications portées dans les zones principales peuvent être modifiées après la validation de l'étape concernée : la figure 5 montre que la deuxième étape "FROM/TO or CO-ROUTE" (voir figure 2) a également été exécutée puisqu'elle est cochée, mais l'indication "CDGFRA1" est apparue dans la zone correspondante pour indiquer au pilote que le trajet entré au clavier est le trajet Charles de Gaulle/Francfort.

De même, une altitude de 33000 pieds (10000 mètres) est maintenant indiquée sous la forme "FL330" dans la zone principale CRZFL qui correspond à l'étape de choix d'altitude de vol en croisière. La zone auxiliaire correspondante, à gauche de la zone principale, est cochée.

Ainsi de suite, la procédure peut être exécutée complètement, y compris les étapes facultatives, et le pilote sait à tout moment où il en est de la procédure, même s'il est interrompu pendant l'exécution, ce qui arrive fréquemment dans la réalité.

On a montré sur ces figures que les zones principales se succèdent principalement de haut en bas, dans l'ordre de la procédure, mais on peut prévoir aussi que plusieurs zones principales apparaissent sur une même ligne, et on prévoir d'associer une zone auxiliaire soit à chacune des zones principales, soit à un groupe de zones comme c'est le cas pour les trois zones "Departure", "en-route", et "Arrival" par exemple.

### 2. autres phases du vol

On a donné des explications détaillées à propos des étapes de procédure de la phase de préparation de vol. Le même principe est utilisé pour les autres phases du vol s'il y a une liste d'étapes de procédure, ou une liste de contrôles à effectuer. En pratique c'est la phase de descente avant la phase d'approche qui nécessite une nouvelle série de vérifications et entrées de données.

Le pilote enclenche encore la touche DO_LIST, et le calculateur FMS, qui sait dans quelle phase de vol on est, affiche alors sur l'écran la liste d'opérations à effectuer, différente de celle de la figure 2, mais présentée de la même manière en zones principales et en zones auxiliaires associées chacune à une zone principale respective.

Dans un mode de réalisation de l'invention, on peut prévoir que les zones auxiliaires sont des zones sélectionnables et activables comme les zones principales par les moyens de sélection de la console. Ceci permet alors
- soit de sélectionner une zone auxiliaire cochée, l'activation provoquant l'enlèvement de la marque de cochage, par exemple dans le cas où le pilote veut reprendre ultérieurement l'étape de procédure considérée,
- soit même, dans des cas plus exceptionnels de cocher une étape sans être passé par la procédure; ceci pourrait être prévu par exemple pour des étapes de procédure facultatives ou de moindre importance, ou encore des étapes particulières qui peuvent être exécutées sans relation avec le calculateur, ou qui ne nécessitent pas l'affichage par le calculateur FMS d'un écran de demande de données.

Selon une autre possibilité très avantageuse de l'invention, on peut prévoir un perfectionnement du système selon l'invention dans les cas où l'avion est manoeuvré par une équipe de deux pilotes dont l'un est appelé pilote en fonction PF ou pilote volant (pour "Pilot Flying") et l'autre pilote non en fonction PNF ou pilote non volant (pour "Pilot Non Flying").

Les pilotes occupent chacun un siège équipé d'interfaces de dialogue, et ces interfaces sont identiques pour les deux pilotes et sont raccordées d'une manière similaire au calculateur FMS. Les deux consoles MCDU sont contrôlées indépendamment par les pilotes, le calculateur sachant distinguer les deux consoles aussi bien pour l'affichage que pour l'entrée de données.

On propose alors selon l'invention qu'à chaque zone principale de l'écran appelé par la touche DO_LIST soient associées deux zones auxiliaires différentes, de préférence une à gauche et une à droite de la zone principale.

C'est ce qui est représenté sur les figures. Le calculateur cochera sur chacun des écrans la zone auxiliaire de gauche si c'est le pilote de gauche qui a effectué et validé l'étape de procédure, ou la zone auxiliaire de droite si c'est le pilote de droite qui l'a fait.

Ainsi, il apparaît sur les deux consoles les étapes de procédure effectuées et chacun des pilotes peut déterminer qui a effectué l'opération. Il est courant en effet que l'un des pilotes demande à l'autre d'effectuer certaines opérations; il peut ainsi s'assurer à tout instant de ce qui a été fait sans avoir besoin de mémoriser intellectuellement à la fois ses propres actes et ceux de son collègue.

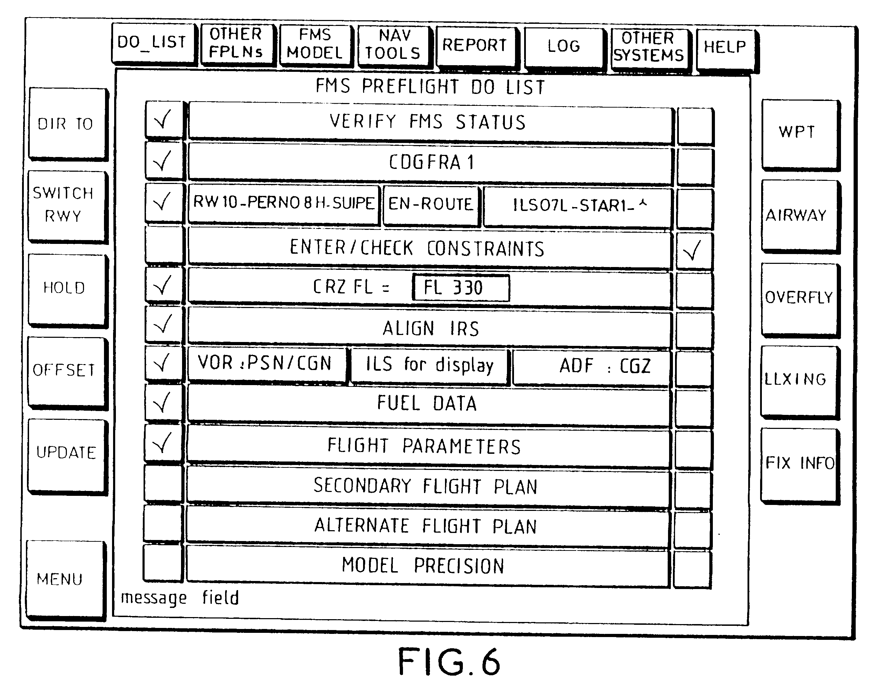

La figure 6 représente un exemple correspondant, dans lequel une des opérations a été effectuée par le pilote de droite. Les deux consoles affichent la même image.

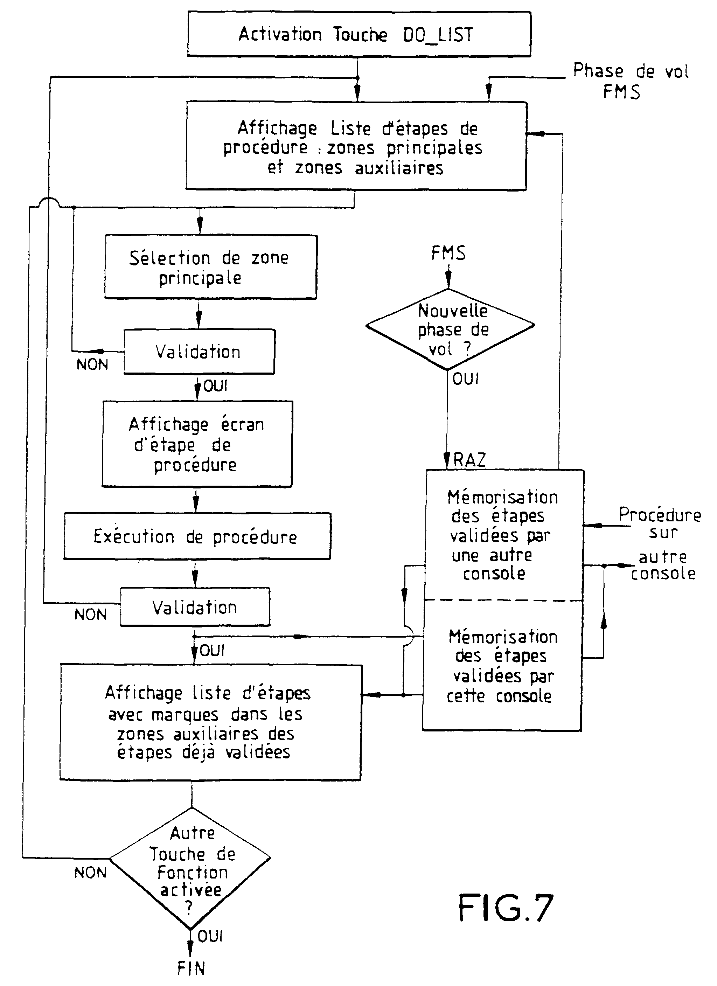

Bien entendu, l'invention est réalisée en programmant adéquatement le calculateur FMS, et l'organigramme général de fonctionnement de la partie logicielle correspondant à l'invention est rappelé sur la figure 7. On a montré sur cet organigramme :
- l'affichage du menu d'étapes de procédure lors de l'activation de touche de fonction "DO_LIST", l'affichage dépendant de la phase de vol dans laquelle on est; les zones auxiliaires sont cochées seulement pour des étapes de procédure qui auraient déjà été effectuées, notamment par l'autre pilote sur l'autre console;
- la sélection et la validation d'une zone principale, avec l'affichage d'un nouvel écran correspondant;
- la validation après exécution d'une étape de procédure, et la mise en mémoire de cette information de validation, en vue de l'affichage ultérieur sur les deux consoles s'il y en a deux;
- le nouvel affichage de menu d'étapes avec cochage d'une nouvelle zone auxiliaire et des zones auxiliaires correspondant aux étapes déjà validées;
- la remise à zéro de la mémoire des cochages si on change de phase de vol, étant donné que le menu de procédures affiché par l'activation de la touche DO_LIST dépend de la phase de vol; et l'affichage dans le nouveau menu des informations entrées au cours des phases précédentes et qui restent valables dans la nouvelle phase;
- la possibilité de continuer la procédure par sélection d'une nouvelle étape de procédure, ou la fin de la procédure si une autre touche de fonction est activée.

Dans la pratique, les deux phases essentielles pour lesquelles le menu DO_LIST sera utilisé seront la phase de préparation du vol et la phase d'approche. Le menu affiché au début de la procédure en phase d'approche comportera des zones auxiliaires 50 non cochées (effacement de la mémoire des cochages) mais comportera par ailleurs des indications qui ont été entrées pendant la phase de préparation du vol (c'est-à-dire qu'il y a remise à zéro de la mémoire des cochages mais il n'y a pas remise à zéro d'autres informations dont la validité subsiste).

| Traduction des mots anglais des figures 2 à 6 : | |
|---|---|
| do_list | liste de tâches |
| other | autres |
| model | modèle |
| tools | instruments |
| systems | systèmes |
| help | aide |
| preflight | avant le vol |
| verify | vérifier |
| from/to | de/à |
| switch | commutation |
| hold | maintien |
| update | mise à jour |
| airway | chemin aérien |
| overfly | survol |
| cancel | effacer |
| validate | valider |
| engine | moteur |
| number | numéro |
| departure | départ |
| arrival | arrivée |
| enter/check | entrée/vérification |
| constraints | contraintes |
| align | aligner |
| for display | affichage |
| fuel | fioul |
| data | données |
| flight | vol |
| parameters | paramètres |
| secondary | secondaire |
| alternate | alternatif |
| field | champ |
| cost | coût |
| all pilot entered data DELETED : toutes les données entrées par le pilote effacées | |

## Revendications

1. Procédé d'aide à la navigation aérienne, utilisant un système de gestion de vol (FMS) couplé à au moins une console d'affichage et d'entrées de données (MCDU), la console permettant notamment de sélectionner des zones prédéterminées de l'écran pour exécuter des opérations correspondant respectivement aux différentes zones, caractérisé en ce qu'il consiste à
- afficher simultanément sur la console une série de zones principales successives (40) correspondant chacune à une étape d'une procédure de navigation, et une zone auxiliaire (50, 60) indépendante associée à chaque zone principale et située immédiatement à côté de cette zone principale,
- en cas de sélection par un utilisateur d'une zone principale correspondant à une étape de procédure déterminée, afficher sur la console des éléments nécessaires à l'exécution de cette étape,
- en cas d'entrée dans la console d'une information de validation de l'étape de procédure correspondant à la zone principale sélectionnée, afficher à nouveau la série de zones principales et les zones auxiliaires associées, et afficher simultanément dans la zone auxiliaire associée à la zone principale sélectionnée une marque spécifique indiquant que l'étape de procédure a été validée,
- conserver en mémoire et réafficher après l'exécution d'autres étapes de procédure correspondant à d'autres zones principales, les marques spécifiques précédemment affichées, de manière à faire apparaître globalement sur la console l'exécution validée de toutes les étapes de procédure déjà effectuées.

2. Procédé d'aide à la navigation selon la revendication 1, caractérisé en ce que le système de gestion de vol comporte une deuxième console identique à la première, en ce qu'une première et une seconde zones auxiliaires (50, 60) sont associées à chacune des zones principales, et en ce que :
- l'entrée d'une information de validation par la première console lors de l'exécution d'une étape de procédure correspondant à une zone principale déterminée entraîne l'affichage d'une marque spécifique dans la première zone auxiliaire (50) associée à cette zone principale, aussi bien sur la première console que sur la deuxième console,
- et réciproquement l'entrée d'une information de validation par la deuxième console entraîne l'affichage d'une marque spécifique dans la deuxième zone auxiliaire (60) associée à la même zone principale, aussi bien sur la première console que sur la deuxième console.

3. Dispositif d'aide à la navigation aérienne utilisant un système de gestion de vol (FMS) qui dialogue avec le pilote par le moyen de plusieurs interfaces parmi lesquelles au moins une console d'affichage et d'entrée de données (MCDU), caractérisé en ce qu'il comporte des moyens pour afficher simultanément sur la console une série de zones principales successives (40) correspondant chacune à une étape d'une procédure de navigation, et une zone auxiliaire indépendante (50, 60) associée à chaque zone principale et située immédiatement à côté de cette zone principale, des moyens actionnables par l'utilisateur pour sélectionner une zone principale déterminée, des moyens pour présenter sur la console, lorsqu'une zone principale est sélectionnée, un affichage nécessaire pour exécuter l'étape de procédure correspondant à cette zone principale, des moyens pour entrer dans la console une information de validation de l'étape de procédure et pour afficher alors à nouveau la série de zones principales et les zones auxiliaires associées, des moyens pour afficher dans la zone auxiliaire associée à la zone principale sélectionnée une marque spécifique indiquant que l'étape de procédure a été validée, et des moyens pour conserver en mémoire et réafficher après l'exécution d'autres étapes de procédure correspondant à d'autres zones principales, les marques spécifiques précédemment affichées, de manière à faire apparaître globalement sur la console l'exécution validée de toutes les étapes de procédure déjà effectuées.

4. Dispositif selon la revendication 3, caractérisé en ce que le système de gestion de vol comporte une deuxième console identique à la première, une première et une seconde zone auxiliaire (50, 60) étant associée à chacune des zones principales, et des moyens étant prévus pour qu'une information de validation entrée par la première console lors de l'exécution d'une étape de procédure correspondant à une zone principale déterminée entraîne l'affichage d'une marque spécifique dans la première zone auxiliaire (50) associée à cette zone principale, aussi bien sur la première console que sur la deuxième console, et réciproquement qu'une information de validation entrée par la deuxième console entraîne l'affichage d'une marque spécifique dans la deuxième zone auxiliaire (60), aussi bien sur la première console que sur la deuxième console.

## Patentansprüche

1. Verfahren zur Unterstützung der Flugnavigation unter Verwendung eines Flug-Managementsystems (FMS), das mit mindestens einer Konsole (MCDU) zur Anzeige und zur Eingabe von Daten gekoppelt ist, welche insbesondere eine Auswahl von vorbestimmten Zonen auf dem Bildschirm zur Ausführung von den verschiedenen Zonen jeweils entsprechenden Operationen erlaubt, dadurch gekennzeichnet, daß es darin besteht,
- zugleich an der Konsole eine Folge von aufeinanderfolgenden Hauptzonen (40) entsprechend je einem Schritt einer Navigationsprozedur sowie je eine unabhängige Hilfszone (50, 60) anzuzeigen, die jeder Hauptzone zugeordnet ist und unmittelbar neben dieser Hauptzone liegt,
- im Fall der Auswahl einer Hauptzone entsprechend einem bestimmten Schritt der Prozedur durch einen Benutzer die für die Durchführung dieses Schritts erforderlichen Elemente an der Konsole anzuzeigen,
- im Fall der Eingabe einer Bestätigungsinformation eines Schritts der Prozedur entsprechend der ausgewählten Hauptzone an der Konsole eine neue Folge von Hauptzonen und zugeordneten Hilfszonen sowie zugleich in der der ausgewählten Hauptzone zugeordneten Hilfszone eine spezifische Marke anzuzeigen, die angibt, daß der Schritt der Prozedur bestätigt worden ist,
- nach der Durchführung weiterer Schritte der Prozedur entsprechend anderen Hauptzonen die spezifischen vorher angezeigten Marken im Speicher zu behalten und erneut anzuzeigen, sodaß an der Konsole global die bestätigte Ausführung aller bereits durchgeführter Schritte der Prozedur sichtbar wird.

2. Verfahren zur Unterstützung der Navigation nach Anspruch 1, dadurch gekennzeichnet, daß das Flug-Managementsystem eine zweite Konsole identisch der ersten enthält, daß eine erste und eine zweite Hilfszone (50, 60) jeder der Hauptzonen zugeordnet sind und daß
- die Eingabe einer Bestätigungsinformation an der ersten Konsole bei der Ausführung eines Schritts der Prozedur entsprechend einer bestimmten Hauptzone zur Anzeige einer spezifischen Marke in der ersten der dieser Hauptzone zugeordneten Hilfszonen (50) sowohl an der ersten als auch an der zweiten Konsole führt,
- und umgekehrt die Eingabe einer Bestätigungsinformation an der zweiten Konsole zur Anzeige einer spezifischen Marke in der zweiten der dieser gleichen Hauptzone zugeordneten Hilfszonen (60) sowohl an der ersten als auch an der zweiten Konsole führt.

3. Vorrichtung zur Unterstützung der Flugnavigation unter Verwendung eines Flug-Managementsystems (FMS), das Informationen mit dem Pilot über mehrere Schnittstellen austauscht, zu denen mindesten eine Konsole (MCDU) zur Anzeige und zur Eingabe von Daten gehört, dadurch gekennzeichnet, daß es an der Konsole Mittel zur gleichzeitigen Anzeige einer Folge von aufeinanderfolgenden Hauptzonen (40) entsprechend je einem Schritt einer Navigationsprozedur und je einer unabhängigen Hilfszone (50, 60), die jeder Hauptzone zugeordnet ist und unmittelbar neben dieser Hauptzone liegt, vom Benutzer aktivierbare Mittel zur Auswahl einer bestimmten Hauptzone, Mittel zur Anzeige der für die Ausführung eines Schritts der Prozedur entsprechend dieser Hauptzone erforderlichen Informationen an der Konsole, wenn eine Hauptzone ausgewählt wurde, Mittel zur Eingabe einer Bestätigungsinformation des Schritts der Prozedur in die Konsole und zur Anzeige einer neuen Folge von Hauptzonen und der zugeordneten Hilfszonen, Mittel, um in der der ausgewählten Hauptzone zugeordneten Hilfszone eine spezifische Marke anzuzeigen, die angibt, daß der Schritt der Prozedur bestätigt wurde, sowie Mittel aufweist, um nach der Ausführung weiterer Schritte der Prozedur entsprechend anderen Hauptzonen die vorher angezeigten spezifischen Marken im Speicher zu erhalten und erneut anzuzeigen, sodaß global an der Konsole die bestätigte Ausführung aller bereits durchgeführten Schritte der Prozedur sichtbar wird.

4. Vorrichtung nach Anspruch 3, dadurch gekennzeichnet, daß das Flug-Managementsystem eine zur ersten identische zweite Konsole besitzt und daß eine erste und eine zweite Hilfszone (50, 60) jeder der Hauptzonen zugeordnet und Mittel vorgesehen sind, die bewirken, daß eine über die erste Konsole bei der Ausführung eines Schritts der Prozedur entsprechend einer bestimmten Hauptzone eingegebene Bestätigungsinformation zur Anzeige einer spezifischen Marke in der dieser Hauptzone zugeordneten ersten Hilfszone (50) sowohl an der ersten Konsole als auch an der zweiten Konsole führt, und daß umgekehrt eine über die zweite Konsole eingegebene Bestätigungsinformation zur Anzeige einer spezifischen Marke in der zweiten Hilfszone (60) sowohl an der ersten Konsole als auch an der zweiten Konsole führt.

## Claims

1. Method for aiding aerial navigation, using a flight management system (FMS) coupled to at lest one data display and input console (MCDU), the console making it possible in particular to select predetermined zones of the screen so as to execute operations respectively corresponding to the various zones, characterised in that it consists in
- simultaneously displaying on the console a series of successive main zones (40) each corresponding to a step of a navigation procedure, and an independent auxiliary zone (50, 60) associated with each main zone and lying immediately next to this main zone,
- in the event that a user selects a main zone corresponding to a specified procedural step, displaying on the console elements necessary for executing this step,
- in the event that an item for validating the procedural step corresponding to the selected main zone is input into the console, once again displaying the series of main zones and the associated auxiliary zones, and simultaneously displaying in the auxiliary zone associated with the selected main zone a specific mark indicating that the procedural step has been validated,
- retaining in memory and redisplaying, after executing other procedural steps corresponding to other main zones, the previously displayed specific marks, in such a way as to make the validated execution of all the procedural steps already performed appear comprehensively on the console.

2. Method for aiding navigation according to claim 1, characterised in that the flight management system comprises a second console identical to the first, in that a first and a second auxiliary zone (50, 60) are associated with each of the main zones, and in that
- the inputting of a validation item via the first console during the execution of a procedural step corresponding to a specified main zone causes a specific mark to be displayed in the first auxiliary zone (50) associated with this main zone, both on the first console and on the second console,
- and conversely the inputting of a validation item via the second console causes a specific mark to be displayed in the second auxiliary zone (60) associated with the same main zone, both on the first console and on the second console.

3. Device for aiding aerial navigation using a flight management system (FMS) which carries out a dialogue with the pilot by means of several interfaces which include at least one data display and input console (MCDU), characterised in that it comprises means for simultaneously displaying on the console a series of successive main zones (40) each corresponding to a step of a navigation procedure, and an independent auxiliary zone (50, 60) associated with each main zone and lying immediately next to this main zone, user-actuatable means for selecting a specified main zone, means for exhibiting on the console, when a main zone is selected, a display necessary for executing the procedural step corresponding to this main zone, means for inputting into the console an item for validating the procedural step and for then once again displaying the series of main zones and the associated auxiliary zones, means for displaying in the auxiliary zone associated with the selected main zone a specific mark indicating that the procedural step has been validated, and means for retaining in memory and redisplaying, after executing other procedural steps corresponding to other main zones, the previously displayed specific marks, in such a way as to make the validated execution of all the procedural steps already performed appear comprehensively on the console.

4. Device according to claim 3, characterised in that the flight management system comprises a second console identical to the first, a first and a second auxiliary zone (50, 60) being associated with each of the main zones, and means being provided in order that a validation item input via the first console during the execution of a procedural step corresponding to a specified main zone causes a specific mark to be displayed in the first auxiliary zone (50) associated with this main zone, both on the first console and on the second console, and conversely that a validation item input via the second console causes a specific mark to be displayed in the second auxiliary zone (60), both on the first console and on the second console.
